# EUROPEAN PATENT SPECIFICATION

(11) **EP 2 147 833 B1**
(45) Date of publication and mention of the grant of the patent: **11.09.2013**
(21) Application number: 08382031.6
(22) Date of filing: 22.07.2008
(51) Int. Cl.: B60R 21/276

(54) **Airbag module with safety valve**
Airbagmodul mit Sicherheitsventil
Module d'airbag avec vanne de sécurité

(43) Date of publication of application: 27.01.2010
(73) Proprietor: Dalphi Metal España, S.A., 28006 Madrid (ES)
(72) Inventor: Ollero Ollero, Jorge, 36213, Vigo, Pontevedra (ES); Lois Martinez, Carlos, 36213, Vigo, Pontevedra (ES)
(74) Representative: Mehnert, Bernhard

(56) References cited:
- DE-A1- 10 032 791
- US-A1- 2007 102 911
- US-A1- 2008 036 188

## Description

### FIELD OF THE INVENTION

This invention refers to an airbag module for cars and more specifically to an airbag module with a safety valve that guarantees its integrity during the first phase of unfolding of the bag.

### BACKGROUND ON THE INVENTION

An airbag module basically consists of a folded bag that is rapidly inflated through gas produced by a generator when certain sensor devices detect a collision of the vehicle. This way, the bag unfolds between the vehicle occupant and a part of the vehicle protecting him during the collision.

During the normal unfolding of the bag, the internal pressure produced by the generator while filling it with gas can be sufficiently high to make the bag so hard that the occupant bounces back. To avoid this inconvenience they have been equipped with one or more ventilation orifices that serve to reduce the internal pressure of the bag and, therefore, the possibility of causing damage when activated.

In addition, there are several resources for covering these ventilation orifices in order to better control the internal pressure of the bag than solely the variation of the orifice size. In this sense, we should highlight the use of patches to ensure the gas does not immediately leave through a discharge orifice but when the patch breaks on reaching a given pressure inside the bag. The technology has proposed various types of patches with different means to control their rupture depending, to a greater or lesser extent, on a given resistance to gas pressure inside the bag. This way, the gas pressure necessary for the bag to fulfil its protecting purpose is present together with the guarantee that the gas pressure does not exceed a certain value, putting at risk the persons on which the bag unfolds.

The state of the art comprises different ventilation devices (with or without obturation means) to adapt them to the specific characteristics of each collision and/or type of passenger affected, which discharge gas to the inside of the vehicle.

There are also proposals such as the case of an airbag module described in patent DE 10032791 in which the ventilation device has a double purpose: reduce the global pressure of the bag and prevent that the gas may burn the occupant; therefore the ventilation orifice is placed in such a way that, on one hand, gas discharge is performed towards the chassis of the vehicle and, on the other hand, ventilation is activated simultaneously with the unfolding of the bag. Initially there is no ventilation because the pleats of the bag prevent gas from reaching the ventilation orifice and as the bag unfolds, the gas is discharged through the ventilation orifice.

In addition, the aforementioned technology also refers to gas output flow control from the generator to the bag including safety valves with discharge orifices to avoid excessive gas pressure during the first phase of bag unfolding, i.e.: from the moment in which gas generation is activated until the bag breaks the cover. The proposals known on this respect generally use pyrotechnic mechanisms as actuators of the discharge orifice obturation actuators that are activated after a predetermined amount of time from the start of gas generation.

US 2007/0102911 A1, which is considered as the closest prior art, discloses an airbag module comprising the features of the preamble of independent claim 1.

These pyrotechnic mechanisms are complex and this invention focuses on resolving this inconvenience.

### SUMMARY OF THE INVENTION

One purpose of this invention is to provide an airbag module with a low cost safety valve to regulate gas flow from the generator to the bag during the first phase of bag unfolding.

Another purpose of this invention is to provide an airbag module with a safety valve to regulate the flow of gas from the generator to the bag in order to prevent the flow from causing damage that risks the integrity of the airbag module.

Another purpose of this invention is to provide an airbag module with a safety valve to regulate the flow of gas from the generator to the bag in order to prevent the flow from causing damage that risks the integrity of the airbag module.

These and other purposes are achieved with an airbag module for cars that comprise an inflatable bag, a gas generator for the supply of gas to the inflatable bag in the event of impact, a casing with a cover with predetermined breaking lines for its division in one or more flaps during the unfolding of the inflatable bag and a rigid plate for securing the airbag module to the car and at least one ventilation area situated to face a bodywork of the car through contiguous orifices in the inflatable bag and the rigid plate in a mounted state of the airbag module, securing the area of the inflatable bag around the orifice to the rigid plate to ensure that the ventilation area defined by said contiguous orifices allow avoiding overpressure that risks the integrity of the airbag module during the initial unfolding phase of the bag.

According to the invention, the airbag module also comprises an obturation device of said ventilation area configured to ensure obturation once the unfolding of the inflatable bag reaches a phase in which the volume of gas inside is sufficient to prevent an overpressure that risks the integrity of the airbag module. This ensures that all the gas provided by the generator is maximized after overcoming the risk caused by said overpressure.

According to a first alternative of the invention, the obturation device includes a plug a tie connected at one of its ends to the plug and on the other end to the bag in order to work as the actuator of the device. This ensures that the moment of obturation of the ventilation area is linked to a given unfolding status of the bag.

According to a second alternative of the invention, the obturation device entails a plug and tie connected to the plug on one end and to a flap of the module cover on the other in order to work as actuator of the device. This ensures that the obturation moment is after the breaking of the airbag module cover.

Other characteristics and advantages of this invention shall be described in detail followed by an illustration, and in no case limited in purpose with regards to the drawings attached.

### DESCRIPTION OF THE FIGURES

Figure 1 is a transversal schematic view of an airbag module with a ventilation area pointing towards the vehicle's bodywork.
Figures 2a and 2b are transversal schematic views of an airbag module as per a first preferential embodiment of this invention before and after the obturation of the ventilation area.
Figures 3a and 3b are transversal schematic views of an airbag module as per a second preferential embodiment of this invention before and after the obturation of the ventilation area.

### DETAILED DESCRIPTION OF THE INVENTION

For the purposes of this invention, the basic elements of the airbag module subject of this are:
- One inflatable bag 11
- One gas generator 13
- One casing 17 that serves as primary body and support for the rest of components. It includes space sized to store the bag 11 as per the previously established folding procedure and space for the generator 13 suitably configured for the distribution of gas in the bag. It also includes a cover 15 with one or more predetermined break lines so that, during the unfolding of the bag, it can be divided in flaps 19 that are secured to the casing 17, avoid dislodging that may injure the vehicle's passenger.
- One rigid plate 23.

In the preferential embodiments of the invention illustrated in the Figures, the airbag module is a module destined to the protection of the vehicle driver and has a basic configuration that is well known in technology. The airbag module is secured to the steering wheel of the vehicle through, for example, a clip-on mechanism involving securing elements placed on the rigid plate 23 with reception elements placed on the car steering wheel. Furthermore, the airbag module is structured with generator 13 in a central position and the inflatable bag 11 folded around it so that the direction of unfolding is noticeably perpendicular to the ring of the steering wheel.

According to a preferential embodiment of this invention, the airbag module also comprises at least one safety valve consisting of a ventilation area 25 pointing towards the bodywork of the vehicle and an obturation device 35 on finishing the first phase of unfolding of the bag 11, i.e.: when the bag 11 reaches a volume that is sufficient to avoid overpressure that risks the integrity of the module.

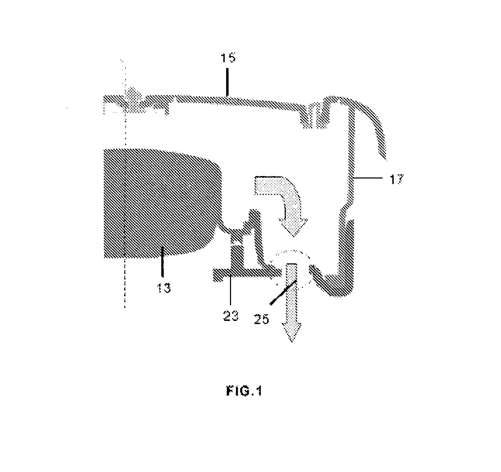

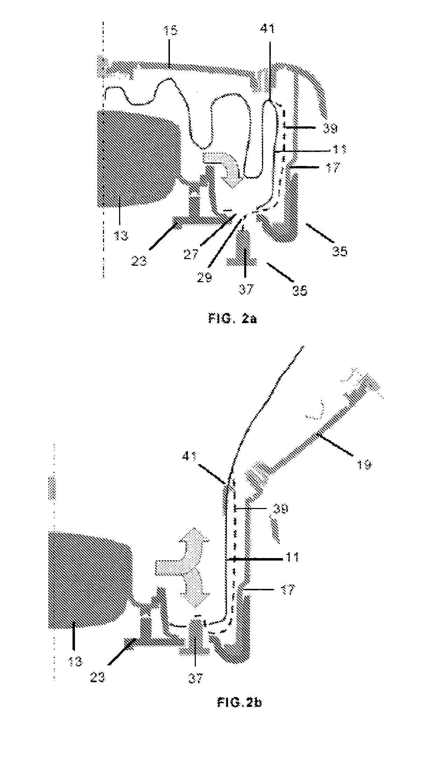

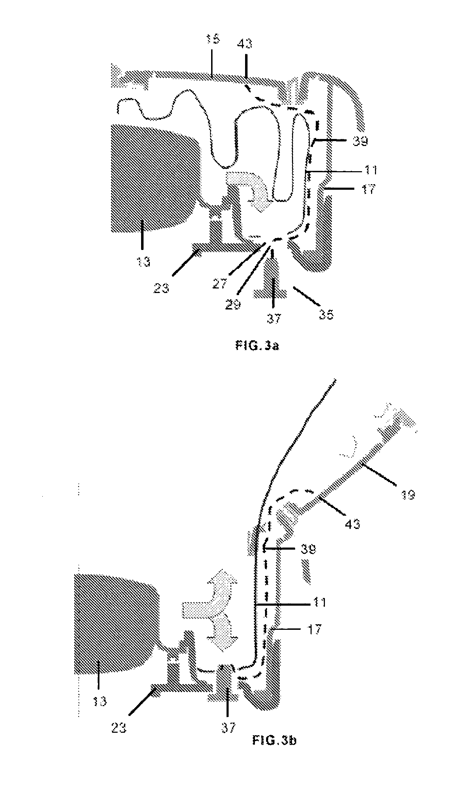

As already illustrated in Figure 1, the ventilation area 25 points to the bodywork of the vehicle so that the gas evacuated through it does not affect the driver of the vehicle and, as illustrated in greater detail in Figures 2a and 3a, it consists of contiguous orifices 27, 29 en, respectively, bag 11 and rigid plate 23. Given that the orifice 27 of the bag 11 is placed in an area that does not unfold - due to being secured to the rigid plate 23 - it ensures that the surface of evacuation of the ventilation area 25 does not change until blocked with the obturation device 35.

The preferential embodiment of the invention illustrated in Figures 2a and 2b display an obturation device 35 consisting of a plug 37 and a tie 39 connected to the plug 37 on one end and to the bag 11 on the other in a predefined position 41 that ensures that at a predetermined stage of unfolding the bag 11 it moves the plug 37 that covers the ventilation area 25. Figure 2a shows the airbag module with the obturation device 35 in rest state and in Figure 2b it shows the airbag module with the ventilation area 25 covered by plug 37 of the obturation device 35.

The preferential embodiment of the invention illustrated in Figures 3a and 3b display an obturation device 35 consisting of a plug 37 and tie 39 connected on one end to the plug 37 and on the other to the flap 19 of the cover 15 in a predefined position 43 that ensures that on reaching the unfolding of the bag 11 to a pre-established phase it moves the plug 37 that covers the ventilation area 25. Figure 3a shows the airbag module with the obturation device 35 in rest status and Figure 3b shows the airbag module with the ventilation area 25 covered by plug 37 of the obturation device 35.

It is noted that this invention provides a safety valve that allows controlling the flow of gas from the generator 13 to the bag 11 at the start of unfolding of the bag 11 without using any pyrotechnical system.

During the initial phase of unfolding of the bag, we should differentiate two phases:
- One first phase of unfolding that initiates gas generation until the cover breaks, the duration of which is around 3 to 9 ms (depending on room temperature).
- A second phase during which the bag starts to leave the casing until the unfolding formally starts, the duration of which is around 10 ms.

While the safety valves known in the previous technique use pyrotechnical mechanisms, the valve closing time is determined by a given period of time, in this invention the closing of the valve takes place when the event that determines the need to close the valve takes place, which is to have reached a state of unfolding of the bag in which the internal pressure does not produce integrity problems. Until it closes, the valve in the ventilation area 25 provides a gas discharge orifice. The closing of the valve prevents gas losses during subsequent bag unfolding phases. In other words: the internal pressure is reduced to the start of unfolding to protect integrity and later be able to effectively inflate the bag.

In another preferential embodiment of this invention, the obturation device 35 is dispensed. The ventilation area 25 continues to perform the same safety valve function as in the previously described embodiment and the generator provides a sufficient amount of gas for the desired unfolding of the bag, although the bag maintains the ventilation area 25 open.

Therefore, this invention provides an airbag module with a safety valve that allows avoiding diverse integrity problems of the airbag module during the first phase of unfolding of the bag and, specifically the following:
- Unclipping from the steering wheel
- Bag burns
- Breaking of cover flaps

Any expert on the matter will easily understand that this invention is not only applicable to a driver airbag module as we have described but to any kind of airbag module.

Although several embodiments of the invention have been described and represented, clearly modifications may be included within its scope, and therefore should not be considered limited to said embodiments, but to the content of the following claims.

## Claims

1. Airbag module for a car comprising an inflatable bag (11), one gas generator (13) for supplying gas to the inflatable bag (11) in an event of impact, a casing (17) with a cover (15), a rigid plate (23) for securing the airbag module to the car, and at least one ventilation area (25) situated to face a bodywork of the car through contiguous orifices (27, 29) in the inflatable bag and the rigid plate in a mounted state of the airbag module, thereby helping to prevent overpressure that might endanger the integrity of the airbag module during an initial phase of unfolding of the inflatable bag (11), wherein the airbag module also includes an obturation device (35) of said ventilation area (25) configured to ensure its obturation once the unfolding of the inflatable bag (11) reaches a phase in which the volume of the gas inside is sufficient to prevent overpressure risking the integrity of the airbag module, and wherein said obturation device (35) comprises a plug (37) and a tie (39) connected on one end to the plug (37) and on the other end to an actuator that allows placing the plug (37) in the ventilation area (25) in order to achieve its obturation, **characterized in that** the cover is provided with predetermined breaking lines for its division into one or more flaps (19) during the unfolding of the inflatable bag (11), and wherein said actuator is either the inflatable bag (11) wherein the other end of the tie (39) is connected to an outer side of the inflatable bag (11), or said actuator is one of the flaps (19) of the cover (15), wherein the other end of the
tie (39) is connected to the flap (19) of the cover (15).

2. Airbag module according to claim 1, **characterized in that** a portion of the tie (39) is positioned in a space between the inflatable bag (11) and the casing (17).

## Patentansprüche

1. Luftsack-Modul für ein Kraftfahrzeug, mit einem aufblasbaren Sack (11), einem Gasgenerator (13) zum Zuführen von Gas zu dem aufblasbaren Sack (11) im Falle eines Aufpralls, einem Gehäuse (17) mit einer Abdeckung (15), einer starren Platte (23) zur Befestigung des Luftsack-Moduls an dem Fahrzeug sowie mindestens einem Entlüftungsbereich (25), der so angeordnet ist, dass er in einem montierten Zustand des Luftsack-Moduls einem Fahrzeugaufbau durch zusammenhängende Öffnungen (27, 29) in dem aufblasbaren Sack und der starren Platte gegenüberliegt, wodurch ein Überdruck verhindert wird, der die Unversehrtheit des Luftsack-Moduls während einer Anfangsphase des Entfaltens des aufblasbaren Sacks (11) gefährden könnte, wobei das Luftsack-Modul auch eine Abdichtungsvorrichtung (35) des Entlüftungsbereiches (25) aufweist, die so ausgeführt ist, dass sie ihre Abdichtung sicherstellt, sobald das Entfalten des aufblasbaren Sacks (11) eine Phase erreicht, in der das Gasvolumen im Inneren ausreicht, um einen Überdruck zu verhindern, der die Unversehrtheit des Luftsack-Moduls gefährden würde, und wobei die Abdichtungsvorrichtung (35) einen Dichtstopfen (37) und eine Verbindung (39) aufweist, die an einem Ende mit dem Dichtstopfen (37) und am anderen Ende mit einer Betätigungseinrichtung verbunden ist, welche ermöglicht, dass der Dichtstopfen (37) in dem Entlüftungsbereich (25) angebracht wird, um dessen Abdichtung zu erzielen, **dadurch gekennzeichnet, dass** die Abdeckung mit vorgegebenen Bruchlinien für ihre Unterteilung in eine oder mehrere Klappen (19) während des Entfaltens des aufblasbaren Sacks (11) vorgesehen ist, und wobei die Betätigungseinrichtung entweder aus dem aufblasbaren Sack (11) besteht, wobei das andere Ende der Verbindung (39) mit einer Außenseite des aufblasbaren Sacks (11) verbunden ist oder die Betätigungseinrichtung aus einer der Klappen (19) der Abdeckung (15) besteht, wobei das andere Ende der Verbindung (39) mit der Klappe (19) der Abdeckung (15) verbunden ist.

2. Luftsack-Modul gemäß Anspruch 1, **dadurch gekennzeichnet, dass** ein Abschnitt der Verbindung (39) in einem Raum zwischen dem aufblasbaren Sack (11) und dem Gehäuse (17) angeordnet ist.

## Revendications

1. Module airbag pour automobile comprenant un sac gonflable (11), un générateur de gaz (13) fournissant du gaz au sac gonflable (11) en cas d'impact, un boîtier (17) avec un couvercle (15), une plaque rigide (23) permettant de fixer le module airbag au véhicule, et au moins une zone d'évent (25) située face à la structure du véhicule au travers d'orifices contigus (27, 29) dans le sac gonflable et dans la plaque rigide à l'état monté du module airbag, aidant ainsi à prévenir une surpression qui peut mettre en danger l'intégrité du module airbag durant une phase initiale de déploiement du sac gonflable (11), dans lequel le module airbag inclut aussi un système d'obturation (35) de la dite zone d'évent (25) configuré pour assurer son obturation une fois que le déploiement du sac gonflable (11) atteint une phase à laquelle le volume à l'intérieur est suffisant pour éviter une surpression mettant à risque l'intégrité du module airbag, et pour lequel le dit système d'obturation (35) comprend un bouchon (37) et un lien (39) connecté à une extrémité au bouchon (37) et à l'autre extrémité à un actionneur qui permet le placement du bouchon (37) dans la zone d'évent (25) afin d'obtenir son obturation, **caractérisé en ce que** le couvercle est fourni avec des lignes de rupture prédéfinies pour sa séparation en un plusieurs volets (19) durant le déploiement du sac gonflable (11), et pour lequel le dit actionneur est soit le sac gonflable (11) pour lequel l'autre extrémité du lien (39) est connectée à une face extérieure du sac gonflable (11), où le dit actionneur est un des volets (19) du couvercle (15), pour lequel l'autre extrémité du lien (39) est connecté à un volet (19) du couvercle (15).

2. Module airbag selon la revendication 1, **caractérisé en ce qu'**une portion du lien (39) est positionnée dans un espace entre le sac gonflable (11) et le boîtier (17).
